Europäisches Patentamt

European Patent Office

Office européen des brevets

(11) Publication number: **0 198 591**
A1

## (12) EUROPEAN PATENT APPLICATION

(21) Application number: **86301803.2**

(22) Date of filing: **13.03.86**

(51) Int. Cl.⁴: **A 23 L 1/222**, A 23 L 2/06, A 23 L 2/08

(30) Priority: **15.03.85 US 712595**

(43) Date of publication of application: **22.10.86**
**Bulletin 86/43**

(84) Designated Contracting States: **AT BE CH DE FR GB IT LI NL SE**

(71) Applicant: **THE PROCTER & GAMBLE COMPANY, One Procter & Gamble Plaza, Cincinnati Ohio 45202 (US)**

(72) Inventor: **Tsai, Chee-Hway, 6757 Timberwood Dr., West Chester Ohio 45069 (US)**
Inventor: **Walsh, Michael Andrew, 6634 Seminole Dr., West Chester Ohio 45069 (US)**
Inventor: **Swaine, Robert Leslie, Jr., 12061 Chardon Lane, Cincinnati Ohio 45246 (US)**

(74) Representative: **Brooks, Maxim Courtney et al, Procter & Gamble (NTC) Limited Whitley Road Longbenton, Newcastle-upon-Tyne NE12 9TS (GB)**

(54) Citrus concentrate and beverage with fresh taste and greater storage stability.

(57) The present invention relates to a citrus juice concentrate as well as to a citrus juice beverage (10% to 90% juice) which is high in aqueous essence and low in peel oil. The citrus juice concentrate and beverage have a fresh citrus flavor and aroma, retain their fresh flavor longer during storage, and are low in cooked off-flavor and other off-flavors associated with peel oil. This development is particularly applicable to frozen concentrated orange juice and orange beverages, but it is not limited thereto. The citrus beverage can contain grapefruit, lemon, lime or tangerine juice. Mixtures of these juices as in a citrus punch or related beverage is another aspect of this product.

ACTORUM AG

## CITRUS CONCENTRATE AND BEVERAGE WITH
## FRESH TASTE AND GREATER STORAGE STABILITY

Chee-Hway Tsai

Robert L. Swaine, Jr.

Michael A. Walsh

### BACKGROUND OF THE INVENTION

Citrus fruits have specific growing seasons. They grow only under certain climatic conditions as occur in places such as Florida, Arizona, California, Texas, Brazil, Spain, Italy, Israel and Egypt. Citrus fruits, in particular orange and grapefruit, are available only for limited periods of time during the year. Thus, certain varieties of these fruits, especially those used for juices, may be periodically in short supply. For instance, Florida Valencia oranges which are used in many commercial orange juices are available only from April through July. In order to have a good quality orange juice available year round, the orange juice must be processed for storage and distribution.

Since natural or fresh orange juice contains about 80% to 90% water, the most economical way to store and distribute the juice is in a concentrated form. The bulk of the orange juice commercially processed in the United States is as a frozen concentrated product.

Most commercial concentration processes utilize evaporation techniques to remove the bulk of the water from the juice. However, it is widely recognized that evaporation techniques result in the undesired removal or loss of volatile aroma and flavor compounds along with the water, thereby resulting in a significant deterioration in quality and overall aroma and flavor of the concentrated juice. Evaporation processes also involve heating the juice under conditions which promote oxidation of the compounds in the juice as well as flavor degradation due to caramelization of the sugars, nonenzymatic browning reactions, and other chemical reactions of the aroma and flavor compounds. These off-flavors resulting from heating during concentration can be generically termed "cooked off-flavors".

Numerous methods have been used to mask the cooked off-flavor in concentrated citrus juice and to compensate for the loss of aroma and flavor. Traditionally, the addition of peel oil to citrus juice was thought to be an effective method of masking cooked off-flavor, as well as enhancing positive flavors.

Kealey et al., "Orange Juice Quality with an Emphasis on Flavor Components", CRC Critical Reviews in Food Science and Nutrition, 1-9 (Jan. 1979), found that peel oil at low concentrations is essential for the characteristic flavor of orange juice, and that a good finished product may contain from 0.01% to 0.02% peel oil by volume.

Curl et al., "The Origin of the Off-Flavor which Develops in Processed Orange Juice", The Fruit Products Journal and American Food Manufacturer 26, No. 32, 329-30, 342 (1947), analyzed orange juice with various peel oil contents while investigating off-flavor which develops in processed orange juice. Their results indicated that peel oil was not responsible for much, if any, of the off-flavor; in fact, in some cases it appeared to mask the off-flavor.

Other researchers have found a negative impact from peel oil. U.S. Patent No. 3,862,014, issued to Atkins et al. (1975), disclosed that d-limonene (the major component of peel oil) adversely affected flavor.

Swift, "Flavor Changes in Stored Canned Orange Juice", Proc. Florida State Hort. Soc. 64, 181-185 (1952) concluded that peel oil is a source of the typical storage off-flavor that develops in stored orange juice.

Numerous researchers have studied the effects of the various chemical components of citrus juice on citrus flavor and aroma.

Shaw et al., "Orange Juice Flavor: Contribution of Certain Volatile Components as Evaluated by Sensory Panels", Proc. Int. Soc. Citriculture 3, 804-807 (1977) started with pumpout juice (concentrated juice containing few aroma and flavor volatiles) and added back flavor components. Several compositions with an ethyl butyrate to limonene ratio of 2.1 x 10$^{-3}$ and other flavorants were found to have good orange juice flavor. A similar

0198591

-3-

study was done by Ahmed et al., "Effect of Selected Oil and Essence Volatile Components on Flavor Quality of Pumpout Orange Juice", J. Agric. Food Chem. 26, No. 2, 368-371 (1978).

U.S. Patent No. 4,374,865, issued to Strobel (1983), discloses a natural citrus juice concentrate defined in terms of a ratio of high volatiles to (low volatiles minus limonene) of between 4:1 and 17:1 and a ratio of ethyl butyrate to limonene is 0.0015:1 to 0.6:1. The high and low volatiles refer to the aroma and flavor components of natural orange juice.

Many negatives associated with the presence of peel oil in citrus juice have been discovered. Surprisingly, while peel oil is thought to mask off-flavors, it has been found to detract from the impact of the good aroma and flavor components as well as to introduce off-flavors to the beverage. It is therefore an object of this invention to produce a citrus juice concentrate and a citrus juice-containing beverage that is low in peel oil, especially d-limonene, but is also low in cooked off-flavor. In order to mask the cooked flavor, a high level of highly volatile aroma and flavor components must be added. The proportions of these volatiles to the peel oil is essential in achieving the product of this invention.

It is also an object of this invention to produce a high-quality citrus juice concentrate and beverage from a juice concentrated by thermal or freeze concentration methods.

It is another object of this invention to produce a citrus juice concentrate and beverage that has a fresh citrus flavor and aroma, retains its fresh flavor longer during storage, and tastes more like hand-squeezed citrus juice than current commercial concentrated citrus.

These and other objects of this invention will become apparent by the description of the invention below.

All percentages are by weight unless otherwise defined.

### SUMMARY OF THE INVENTION

The invention is a natural citrus juice concentrate comprising:

0198591

-4-

(a) citrus juice having a solids content of at least about 35%, the citrus juice having from about 0.001% to about 0.010% d-limonene and having any of the following three ratios;

(b) a ratio of high volatiles to low volatiles of greater than about 15:1, or

(c) a ratio of (acetaldehyde + methanol + ethanol) to alpha-pinene of greater than about 120:1; or

(d) a ratio of ethyl butyrate to d-limonene of greater than about $8.0 \times 10^{-3}:1$.

The invention is also a citrus juice beverage comprising about 10% to about 90% citrus juice and about 10% to about 90% other beverage ingredients, the citrus juice containing from about 0.001% to about 0.010% d-limonene and having any of the following three ratios:

(a) a ratio of high volatiles to low volatiles of greater than about 15:1, or

(b) a ratio of (acetaldehyde + methanol + ethanol) to alpha-pinene of greater than about 120:1; or

(c) a ratio of ethyl butyrate to d-limonene of greater than about $8.0 \times 10^{-3}:1$.

## DEFINITIONS

Peel oil is about 90% to 95% d-limonene. The terms "peel oil" and "d-limonene" are used interchangeably herein. For purposes of this invention, the level of d-limonene is calculated by the Scott Method at 11.8°Brix. The Scott $KBr-KBrO_3$ titration method is discussed by Nagy et al. in Citrus Science and Technology, Vol. 2, pp. 506-508 (1977).

By "peel oil", "citrus oil", and "oil" are meant not only the oil recovered from the peel of a citrus fruit, but also d-limonene obtained from the citrus juice by distillation, centrifugation, fractionation, or any other recovery method. Any of the wide variety of peel oils may be used. For example, it can be cold pressed peel oil, stripper oil, essence oil, folded and enriched oil, or fractionated oil (by any method). The source of the peel oil is unimportant.

By "aqueous essence" or by "essence" is meant an aqueous solution of certain volatile compounds recovered from the citrus juice. Aqueous essence volatiles impart a "fruity" aroma and flavor to the juice. Some compounds present in the aqueous essence include: acetaldehyde, methanol, ethanol, ethyl acetate, and ethyl butyrate. Various types of aqueous essence may be used in this invention. For example, it can be commercial aqueous essence, folded essence, stripped essence, or enriched essence. The aqueous essence can be derived from any source of citrus.

By "high aqueous essence/peel oil ratio" or "high essence/low peel oil" or "high essence/low oil" or "HELO" is meant a high ratio of aqueous essence to oil. Oil was measured by the Scott method for d-limonene.

Citrus volatile compounds, including those present in aqueous essences, are those compounds which are swept from a citrus juice sample, i.e. a concentrate reconstituted to single strength juice (from 7% to 20% solids), as follows: 10 ml. of helium per minute is passed through a 1 ml. sample of citrus juice for one minute to remove the volatile compounds. During this sweeping operation the temperature of the sample is held at 27°C ± 1°C. The volatile compounds are then collected at liquid nitrogen temperature and measured gas chromatographically by the method described herein. The GC peak areas are converted to volatile concentrations in parts per billion by the method also described herein, using 10 ml. of headspace sample.

The volatile compounds include a high volatile fraction and a low volatile fraction. The high volatile compounds are eluted first from the capillary gas chromatographic column described in detail later. These compounds are characterized by having a boiling point of about 128°C or less. For purposes of this invention the high volatile compounds are defined as acetaldehyde, methanol, ethanol, ethyl butyrate, and hexanal.

The low volatile fraction is those compounds which elute after the high volatile compounds (i.e. after hexanal). These compounds have a boiling point above about 128°C. For purposes of this invention, the low volatile compounds are defined as alpha-pinene, myrcene, limonene, octanal, gamma-terpinene, nonanal, and linalool.

The ratio of high volatiles to low volatiles is calculated by dividing the total parts per billion of the high volatile compounds enumerated above by the total parts per billion of the low volatile compounds enumerated above, excluding the parts per billion attributable to limonene. The limonene is subtracted from the calculation of the ratio because it comprises such a large percentage of the volatiles. As described herein, the concentration of a volatile in parts per billion (ppb) is determined by multiplying the gas chromatographic count of that volatile by a predetermined response factor. Gas chromatographic counts are the automatically integrated peak areas of the gas chromatograph recorder.

The ratio of (acetaldehyde + methanol + ethanol) to alpha-pinene is calculated by the following fraction:

$$\frac{\text{ppb Acetaldehyde} + \text{ppb Methanol} + \text{ppb Ethanol}}{\text{ppb Alpha-Pinene}}$$

The ratio of ethyl butyrate to d-limonene is calculated by dividing the parts per billion of ethyl butyrate by the parts per billion of d-limonene.

## DETAILED DESCRIPTION OF THE INVENTION

The present invention relates to a citrus juice concentrate as well as to a citrus juice beverage (10% to 90% juice) which is high in aqueous essence and low in peel oil. The citrus juice concentrate and beverage have a fresh citrus flavor and aroma, and retain their fresh flavor longer during storage than current commercial concentrated citrus juices. The products are also low in cooked off-flavor and very little of the off-flavors associated with peel oil are present.

This development is particularly applicable to frozen concentrated orange juice and orange beverages, but it is not limited thereto. It includes grapefruit concentrates and beverages as well as those derived from lemon, lime, tangerine, kumquat, and mixtures of citrus juices.

The concentration of citrus juices by TASTE evaporation or other vacuum evaporation methods imparts a "cooked" off-flavor to the juice, caused by heating the juice to evaporate the water. The art teaches that relatively high oil levels in the resultant concentrated juice are necessary to mask the cooked off-flavors developed during concentration. For example, peel oil and other orange oils have traditionally been used to mask cooked flavor in frozen concentrated orange juice. Commercial concentrated orange juices can contain as much as 0.03% peel oil, and generally have from 0.015% to 0.025% peel oil. The State of Florida currently has a regulation stating that USDA Class A frozen concentrated orange juice must have a minimum peel oil content of 0.010%.

While experimenting on frozen concentrated orange juice (FCOJ), an organoleptically undesirable "mellowing" problem was discovered. During prolonged storage, the flavor and aroma of the concentrated orange juice declined over time. Positive fresh flavor notes were lost, and negative cooked and/or oxidized off-flavor notes became more perceptible. The flavor display was, in some cases, significantly altered. Traditionally, it was thought that the loss of flavor and aroma in FCOJ upon aging was due to the loss of volatile components from the juice. Surprisingly, the volatile components in the FCOJ remain relatively constant over time, and mellowing was found to be due to a migration phenomenon of the volatiles rather than a loss of volatiles phenomenon.

While not intending to be bound by theory, it is believed that the mellowing problem is caused by migration of peel oil and lipophilic flavor compounds from juice serum to cloud and pulp components over time. Since peel oil is hydrophobic, it migrates from the water-based serum to the more hydrophobic pulp over time, carrying many fresh flavor and aroma components with it. The d-limonene in the peel oil acts as a solvent for the more polar, more aromatic and flavorful chemicals. These compounds are then adsorbed on the more hydrophobic surface of the pulp.

0198591

-8-

The adsorption makes them less available for the tastebuds and organoleptic sensing when the juice is consumed.

There are other flavor problems associated with peel oil. For example, oil degradation and oxidation reactions during storage can produce off-flavors. Additional problems can be caused by absorption of oil by the packaging materials.

Furthermore, citrus oils used at the relatively high levels of most commercial concentrated citrus juices can act as "fixatives". A fixative in the perfume or flavor field is a compound that decreases the overall volatility of a composition. In the case of citrus juice this may be detrimental, because by decreasing the volatility of the flavor and aroma compounds of the juice, the aroma and flavor display may be seriously impaired. The light, fresh juice aromatics may be suppressed, thus not permitting full appreciation of the natural fresh juice flavor of the beverage.

Therefore, it is essential that the peel oil content (d-limonene content) of the citrus juice be kept to a minimum. The citrus juice in the citrus juice concentrate or citrus beverage of this invention contains from about 0.001% to about 0.010% d-limonene (as determined by the Scott Method at 11.8 °Brix). Preferably, the citrus juice in the citrus juice concentrate and the citrus beverage contains from about 0.003% to about 0.008% d-limonene. Most preferably, the citrus juice in the citrus juice concentrate and the citrus beverage of this invention contains from about 0.004% to about 0.006% d-limonene.

It is still necessary to mask the cooked off-flavor in the juice resulting from the heat used during concentration and to enhance positive flavor notes generally associated with peel oil. It has been found that the cooked off-flavor can be reduced without a high peel oil content, through the use of a high ratio of aqueous essence to peel oil in the juice. This high aqueous essence/peel oil ratio covers up the cooked off-flavor in the juice while minimizing the mellowing problem caused by peel oil on storage of the juice. The high essence/low oil (HELO) orange product of this invention also possesses orange character and strength similar to a juice with conventional peel oil and essence levels.

A high aqueous essence concentration by itself does not achieve the objects of this invention. The key to the present invention is the simultaneous alteration of the essence/oil balance and the amount of oil used.

The high aqueous essence/peel oil ratio of this invention can be expressed in different ratios. Most of the high volatile compounds of citrus juices are present in aqueous essence derived from the juice. The peel oil in juice is composed mostly of low volatile (or higher boiling) compounds. Hence, the high aqueous essence/peel oil ratio of this invention can be represented by the ratio of high volatiles to low volatiles. The citrus juice in the citrus juice concentrate or citrus beverage of this invention has a ratio of high volatiles to low volatiles of about greater than about 15:1. Preferably, the ratio of high volatiles to low volatiles should be greater than about 30:1. Most preferably, the citrus juice concentrate and the citrus juice present in the citrus beverage should have a ratio of high volatiles to low volatiles of greater than about 50:1. As noted previously, the low volatiles calculation does not include limonene.

The ratios of volatile compounds are measured by a gas chromatographic analysis of the headspace of the citrus juice or beverage diluted to a single strength. The gas chromatographic technique is described in detail below.

The high aqueous essence/peel oil ratio of this invention can also be characterized by the ratio of (acetaldehyde + methanol + ethanol) to alpha-pinene. Acetaldehyde, methanol, and ethanol are components of the aqueous essence. Alpha-pinene is an accurate indicator of the amount of peel oil present. The citrus juice in the citrus concentrate or citrus beverage of this invention has a ratio of (acetaldehyde + methanol + ethanol) to alpha-pinene of greater than about 120:1. Preferably, the citrus juice of the concentrate or beverage has a ratio of (acetaldehyde + methanol + ethanol) to alpha-pinene of greater than about

0198591

-10-

200:1. Most preferably, the ratio of (acetaldehyde + methanol + ethanol) to alpha-pinene is greater than about 400:1.

The ratio of ethyl butyrate to d-limonene in the citrus juice of the citrus juice concentrate and citrus beverage is also an indicator of a high essence/oil ratio. Ethyl butyrate is a major component of the aqueous essence, while d-limonene is the major component of peel oil. The citrus juice of the citrus juice concentrate or citrus beverage of this invention has an ethyl butyrate to d-limonene ratio of greater than about $8.0 \times 10^{-3}:1$. Preferably, it has an ethyl butyrate to d-limonene ratio of greater than about $10.0 \times 10^{-3}:1$. Most preferably, the ethyl butyrate to d-limonene ratio is greater than about $20.0 \times 10^{-3}:1$.

It has been found that the advantages of this invention will result from a combination of a low peel oil content (low level of d-limonene) with any of the three ratios described above. For example, use of an essence/oil blend which provides a d-limonene level of between about 0.001% and about 0.010% combined with an ethyl butyrate to d-limonene ratio of greater than about $8.0 \times 10^{-3}:1$ will minimize the mellowing effect, cover up cooked off-flavor, and enhance positive flavors. Most preferably, the low d-limonene level will be combined with all three ratios in the citrus juice beverage. However, the invention is not limited to having all three ratios in combination with a low d-limonene level. Usually, if the citrus juice has the volatiles present in one ratio, the components will have a concentration such that the other aspects of the invention (the other ratios) are also present.

One skilled in the art would recognize that, although this invention is phrased in terms of a high essence/oil ratio, it is organoleptically necessary to have at least a minimum amount of both peel oil and essence. For example, "pumpout juice", which contains no peel oil and very little essence, would not be good-tasting without at least a minimal amount of essence and oil added.

An important benefit of this invention is that it does not matter how the juice is concentrated. One can use, for example, thermal concentration, freeze concentration, membrane concentration, or freeze drying. The high essence/oil ratio of this invention masks the cooked off-flavor and various other off-flavors. This invention is therefore commercially valuable because it can use juice concentrated by any method to produce a high-quality, fresh-tasting finished juice.

The benefits of this high aqueous essence/low peel oil invention can be employed in a natural citrus juice concentrate, or in a citrus juice beverage containing other beverage ingredients besides citrus juice. While natural citrus juices may have ratios within the claimed range of this invention, some do not. Therefore, essences can be added to a single strength fresh squeezed or pasteurized citrus juice (such as orange juice) having a peel oil content of about 0.001% to about 0.010% and a solids content of about 9% to about 15% to produce a juice having a high essence/oil ratio wherein the ratio of high volatiles to low volatiles is greater than about 15:1, the ratio of (acetaldehyde + methanol + ethanol) to alpha-pinene is greater than about 120:1, and/or the ratio of ethyl butyrate to d-limonene is greater than about $8.0 \times 10^{-3}:1$.

The citrus juice beverage can contain beverage ingredients such as water, sugar, artificial sweeteners, flavors, fruit juices, and mixtures thereof. Examples of other fruit juices to be used are apple juice, pear juice, cranberry juice, pineapple juice, and grape juice. Mixtures of citrus juices can also be used, alone or with other juices, as in a citrus punch.

The citrus juice concentrate and citrus beverage of the present invention can use any of a variety of citrus fruits. For example, the citrus juice can be selected from the group consisting of orange juice, grapefruit juice, lemon juice, tangerine juice, lime juice, kumquat juice, and mixtures thereof. Any of the varieties of oranges can be used, e.g. Pineapple, Hamlin, Valencia, and Parson Brown.

The citrus beverage of this invention comprises about 10% to about 90% citrus juice and about 10% to about 90% other beverage ingredients. Preferably, the citrus beverage comprises about 20% to about 90% citrus juice and about 10% to about 80% other beverage ingredients. More preferably, the citrus beverage comprises about 30% to about 90% citrus juice and about 10% to about 70% other beverage ingredients. Most preferably, the citrus beverage comprises about 50% to about 90% citrus juice and about 10% to about 50% other beverage ingredients.

The citrus juice concentrate of this invention should be concentrated to a solids content of at least about 35%. Preferably, the citrus juice concentrate should comprise at least about 40% to about 80% solids. Most preferably, the citrus juice concentrate should comprise at least about 40% to about 60% solids.

The instant citrus beverage may be single strength or concentrated. The citrus juice beverage should have a solids content of about 3% to about 60%.

The citrus juice concentrate of this invention can also be used as a flavorant in beverages, including carbonated beverages, dry beverage mixes, and alcoholic beverages, and in candies, baked goods, and culinary mixes.

The sugar (°Brix) to acid ratio of the citrus juice concentrate or the citrus beverage of this invention is organoleptically important. A sugar to acid ratio of about 10:1 to about 30:1 is preferred. A sugar to acid ratio of about 12:1 to about 20:1 is most preferred.

Both the beverages and the concentrated juice can contain pulp. Generally, from about 3% to about 12% centrifugable (sinking) pulp levels (v/v) and about 0% to about 3% sensible pulp are used herein, as determined by the method described by J. W. McAllister, in Citrus Nutrition and Quality, ed. by S. Nagy and J. A. Attaway, pp. 300-304 (1980).

## Processing of the Juice

The citrus juice of this invention can be conventionally processed, except that the process must produce a low peel oil content (low level of d-limonene) and a high aqueous essence/peel oil ratio in the juice. The low peel oil content can be achieved by any means. Either the juice can be carefully extracted from the fruit to avoid contamination with high levels of peel oil, or the fruit juice can be conventionally extracted and the peel oil subsequently removed during essence collection or by centrifugation or other means known in the art. Usually, the high aqueous essence/peel oil ratio results from blending after concentration of the juice. It also can be produced by any conventional method.

A typical complete process can be described as follows. Fresh citrus fruit is washed and then graded. The juice is extracted from the fruit using juice extractors. As mentioned above, either careful extraction or subsequent peel oil removal is normally used. Next the juice is passed through finishers to remove the rag and seeds. The finished juice is passed through equipment to remove the large or sensible pulp. Sensible pulp has a particle size greater than about 0.5 mm. Juice finishers, vibrating screens, centrifuges or any combination of these can be used to remove the large pulp. The sensible pulp is removed to prevent it from being macerated during processing and to prevent it from being oxidized or degraded during further processing steps. The flavor, texture and appearance of the pulp is preserved so it can be added to the concentrated product at the end of the process. The juice which now contains pulp particles less than 0.5 mm. in size (sinking pulp) is referred to herein as "citrus juice".

An optional step after removal of the sensible or large pulp involves stripping the juice of essence and oil by passing steam or an inert gas through the juice, preferably under vacuum. These components can later be added back to the juice.

Next the juice is concentrated by any concentration method. Normally a thermal concentration method such as TASTE evaporation is used. Evaporation economically removes water and increases the concentration of the juice to about 35°Brix or higher (about 35% or higher sugar solids). Preferably, a multi-stage, multi-effect vacuum evaporator such as the TASTE (thermally accelerated short time evaporator) is used. This type of evaporator is common in the Florida citrus industry. The

-14-

evaporators can be operated using either forward flow or mixed flow.

Other means of concentrating the citrus juice can be used. These would include reverse osmosis, freeze drying or freeze concentration. These latter methods do not generate as much cooked or oxidized flavor as found in evaporated products.

The concentrated juice is cooled and pumped to a blend tank and mixed with other components of the product. Water, fresh juice and sensible pulp can be added back to the concentrated juice, as well as oil and essence. The juice is blended so that the peel oil content and the aqueous essence/peel oil ratio fall within the parameters of this invention.

When it is desired to make a citrus beverage, other ingredients such as water, carbonated water, sugars, artificial sweeteners, flavors, fruit juices, and mixtures thereof, can be added. Gums and emulsifiers which are commonly in citrus punches can also be added. Preferred sugars include sucrose, fructose, glucose, corn syrup, high fructose corn syrup, and dextrins.

The concentrated juice or the citrus beverage of this invention can be packed in cans, foil-lined containers, bottles, etc., or by any other method known in the art. Because of the enhanced storage stability of the product of this invention, no particular packaging method needs to be used. However, if desired, the packaging materials could be impermeable to oxygen to even further increase oxidative stability, and the product can be packed under an inert atmosphere such as nitrogen.

### Gas Chromatographic Headspace Analysis

For investigation of aroma volatiles from citrus juice, headspace samples are taken by passing helium over the citrus juice samples to be analyzed. The automated purge and trap headspace analytical system consists of a modified Hewlett Packard 7675A purge and trap sampler and a modified Hewlett Packard 5880A capillary column gas chromatograph.

A 1 ml. sample of citrus juice is placed into a sampling container (15 ml. volume culture tube) equipped with a Teflon[R]-coated stirring bar. After equilibration in a water bath ($\overline{27}$ ± 1°C) for 5 minutes with magnetic stirring, the volatile compounds are swept into a room temperature adsorption tube filled with 200 mg. of Tenax[R], a porous polymer, at a helium rate of 10 ml./min. for 1 minute. This hydrophobic polymer selectively absorbs the organic volatiles and the helium stream containing water is vented to atmosphere. Then the Tenax[R] tube is flushed one more minute with clean, dry helium gas (10 ml./min., flow rate) to remove water from the trap. This water can cause clogging problems by ice formation in the cold trapping system of the capillary column.

Tenax[R] is a porous polymer based on 2,6-diphenyl-p-phenylene oxide available from the Applied Science Division of Milton Roy Co. This porous polymer is used because it is hydrophobic, shows excellent thermal stability, and does not react with most organic aroma volatiles. The adsorption tube is filled with 200 mg. of Tenax[R] (80/100 mesh) and a small plug of silylated glass wool at each end to keep the adsorbent in place. Before use, the Tenax[R] tube is always cleaned for 16 minutes at 250°C in a stream of dry helium gas (10 ml./min.).

Sample injection into a capillary column is performed via desorption of the Tenax[R] trap and reconcentration of the desorbed sample onto the first portion (2 inches) of the capillary column. Thermal desorption is effected by rapidly heating the Tenax[R] tube to 200°C for 8 minutes with helium flowing through it at a flow rate of 2.7 ml./min. The front portion of the capillary column is located inside a trap cooled with liquid nitrogen (-150°C). The sample is swept from the Tenax[R] tube onto the capillary column where it condenses out in a narrow band at liquid nitrogen temperature. For injection of sample into the capillary column, after cooling, this cold trap is heated very rapidly: it takes about 20 seconds to reach 140°C and the temperature is held at 140°C for 1 minute. The helium switching valves and the cooling and heating sequences of the cold trap are controlled automatically in a pre-programmed mode.

The capillary column used in this experiment is a Durawax-3 fused silica capillary column (J&W Scientific, Inc., 0.32 mm. I.d x 60 m. length). Durawax-3 is a stabilized liquid phase which contains 50% of Carbowax-20M and 50% of methyl silicone. The carrier gas flow (He) at the capillary column outlet is 2.7 ml./min. (linear gas velocity = 34.5 cm./sec. at 40°C). The injection port and flame ionization detector temperatures are set at 180°C and 220°C, respectively. The column oven temperature is held at 50°C for 18 minutes, raised to 70°C at 1.5°C/min., then raised at 5°C/min. to 145°C and held for 8 minutes.

The compounds are identified by the retention times of peaks obtained for known standards using the technique of co-injection and peak enhancement. Integration of peak area is obtained by use of Hewlett-Packard 5880A series terminal, level four. This automated headspace analytical system provides good precision for most of the aroma compounds (percent relative standard deviation = 5.0 - 14.7%, n = 6). Citrus juice samples are analyzed at single strength. For determining the volatiles of the instant citrus juice concentrate and beverage, the citrus juice samples were analyzed at 11.8° Brix.

Quantitation of Purge and Trap Headspace GC Volatiles

In order to quantitate the identified components in 10 ml. of headspace dynamically purged from a 1 ml. orange juice sample (27°C), the response factor (amount/peak area) for each component in our headspace analytical system was calculated.

A modification to the purge and trap sampling device was made to enable the injection of a known amount of a flavor component directly into the Tenax[R] trap. Due to the polarity differences, most of the components in Table 1 are retained more strongly (greater than 90 ml. of retention volume) in the Tenax[R] trap than the methanol (26 ml. of retention volume). As a result, a methanol solution containing known quantities of each flavor component was injected and the excess methanol was removed selectively by flushing the Tenax[R] trap with clean carrier gas (50 ml.). Removal of excess solvent (methanol) is critical in the purge and trap analytical system which utilizes cryogenic focusing at the front of the capillary column because a large volume of solvent in a capillary column using cryogenic focusing results in peak splitting problems. To calculate the response factor for methanol, we injected a known amount of methanol in water solution and purged the Tenax$^R$ trap with a total volume of 20 ml. of carrier gas (10 ml. of headspace sample followed by 10 ml. of clean carrier gas) to prevent any loss of methanol and to remove the excess water.

Table 1 lists the response factor (parts per billion of a flavor component/GC peak area of the flavor component) of the known flavor components in 10 ml. of headspace obtained using our purge and trap headspace analytical system. These response factors are the average value of three different concentration ranges with duplicate analyses. This response factor compensates for the effect of the Tenax$^R$ trap sampling system on each flavor component and the sensitivity of each component to the flame ionization detector of the gas chromatograph. The concentration in ppb for the known components in 10 ml. of headspace can be calculated by multiplying peak area by these response factors.

### Table 1

Response Factor of Flavor Components in
Purge and Trap Headspace Analytical System

| Flavor Component | Response Factor (ppb/peak area) |
|---|---|
| Acetaldehyde | 0.0410 |
| Methanol | 0.0181 |
| Ethanol | 0.0115 |
| Ethyl butyrate | 0.0081 |
| Hexanal | 0.0071 |
| Alpha-pinene | 0.0043 |
| Myrcene | 0.0050 |
| Limonene | 0.0046 |
| Octanal | 0.0062 |
| Gamma-terpinene | 0.0055 |
| Nonanal | 0.0062 |
| Linalool | 0.0057 |

## Example 1

The following components derived from oranges were mixed in a blender. An orange juice concentrate was prepared according to this invention (the HELO product) and a conventional orange juice concentrate was prepared (the control product).

|  | HELO Product | Control |
|---|---|---|
| 60°Brix TASTE Concentrate | 643 g | 643 g |
| Aqueous Essence | 136.8 g | 110 g |
| Sensible Pulp | 48 g | 48 g |
| Orange Oil | 138 ul | 480 ul |
| Water | 170 g | 198 g |
| Brix | 41.8° | 41.8° |
| Brix/acid ratio | 16.2 | 16.2 |
| Titratable peel oil (d-limonene) | 0.004% | 0.014% |

The FCOJ samples were kept frozen at -10°F until flavor evaluation and chemical analyses. The samples were reconstituted to 11.8°Brix for flavor and chemical analyses. The volatile ratios in headspace analyzed by capillary gas chromatography as described herein are presented in Table 2:

### Table 2

#### Headspace GC Analyses of Volatile Ratios

| Ratio | HELO Product | Control |
|---|---|---|
| High/Low Volatiles | 29.1:1 | 10.4:1 |
| (Acetaldehyde + Methanol + Ethanol)/Alpha-Pinene | 279.9:1 | 93.4:1 |
| Ethyl Butyrate/d-Limonene | $11.2 \times 10^{-3}$:1 | $4.5 \times 10^{-3}$:1 |

The result of expert panels on fresh and aged FCOJ samples is presented in Table 3:

-19-

### Table 3

### Data of FCOJ Expert Panels*

| Attribute | Fresh Samples | | Aged at 5°F for 1 Month | |
|---|---|---|---|---|
| | Control | HELO | Control | HELO |
| Natural/fresh | 4.2 | 4.1 | 3.8 | 4.3 |
| Cooked/heat treated | 2.1 | 2.6 | 3.5 | 2.3 |

*Scale = 0-10; average of 7 panelists.

The HELO product was judged to be equal to the control before aging, but judged to be better than the control after 1 month of aging at 5°F. In particular, it is seen that the FCOJ with a high essence/oil ratio and a low peel oil content (HELO) was judged to be more natural/fresh tasting after aging for a month and significantly lower in cooked off-flavor after the month's storage. Its flavor remained essentially the same.

### Example 2

The following orange juice components were blended to produce a HELO product:

| | |
|---|---|
| 65°Brix TASTE Concentrate | 643 g |
| Aqueous Essence | 149 g |
| Sensible Pulp | 49 g |
| Orange Oil | 170 ul |
| Water | 170 g |
| | |
| Brix | 41.6° |
| Brix/acid ratio | 16.3 |
| Titratable peel oil | 0.003% |

The volatile ratios determined by headspace GC analyses are presented in Table 4:

-20-

## Table 4

Volatile Ratios of the HELO product

|  | Ratio |
|---|---|
| High/Low Volatiles | 39.9:1 |
| (Acetaldehyde + Methanol + Ethanol)/Alpha-Pinene | 489:1 |
| Ethyl butyrate/d-Limonene | $14.5 \times 10^{-3}:1$ |

The sample tasted very fresh when reconstituted to 11.8°Brix with water.

## Example 3

A high essence/low oil (HELO) orange juice concentrate sample was prepared as follows:

| | |
|---|---|
| 65°Brix TASTE Concentrate | 62.4 g |
| Aqueous Essence | 4.94 g |
| Sensible Pulp | 5.90 g |
| Terpeneless Orange Oil | 0.48 ul |
| Fractionated Orange Oil | 0.70 ul |
| Water | 26.8 g |
| Brix | 42.3° |
| Brix/acid ratio | 15.09 |
| Titratable peel oil | 0.002% |

A control sample with 0.014% titratable oil was prepared as in Example 1. Both FCOJ's were diluted to 11.8°Brix, and both were examined by an expert flavor panel. The remaining concentrate was stored at -10°F for 5 weeks. The FCOJ's were then diluted to 11.8°Brix and re-examined by the panel. The results are in Table 5.

## Table 5

|  | Fresh | Cooked | Candy/ Artificial |
|---|---|---|---|
| Fresh sample HELO | 3.8 | 2.5 | 2.6 |
| 5 week sample HELO | 3.9 | 2.3 | 2.5 |
| Fresh sample control | 3.6 | 2.8 | 2.5 |
| 5 week sample control | 3.3 | 2.6 | 3.0 |

\* Scale = 0-10; average of 7 panelists.

Analytical data concerning GC headspace volatile ratios are supplied in Table 6.

## Table 6

### Volatile Ratios by Headspace GC Analysis

|  | HELO Product | Control |
|---|---|---|
| High/Low Volatiles | 75.2:1 | 12.9:1 |
| (Acetaldehyde + Methanol + Ethanol)/Alpha-Pinene | 840.9:1 | 109:1 |
| Ethyl butyrate/Limonene | $4.9 \times 10^{-2}$:1 | $5.2 \times 10^{-3}$:1 |

This Example demonstrates that the HELO product prepared according to this invention is more stable in flavor than the control product. The parameters of the HELO product stayed about the same after storage for five weeks, while the control product lost some of its fresh flavor and gained some candy/artificial off-flavor.

This Example also demonstrates that terpeneless and fractionated orange oil can be used instead of regular orange oil.

-22-

## Example 4

An orange beverage is prepared by mixing 50% of the HELO citrus concentrate of Example I with 20% sugar (sucrose), 5% pulp and 25% water. The product is a fresh-tasting superior orange beverage. When lemon juice is used in place of water, a fresh-tasting citrus punch is prepared.

CLAIMS

1.  A natural citrus juice concentrate comprising:
(a)  citrus juice having a solids content of at least about 35%;
(b)  from about 0.001% to about 0.010% d-limonene; and
(c)  citrus volatile compounds, said volatile compounds comprising a high volatile fraction and a low volatile fraction, the ratio of said high volatiles to said low volatiles being greater than about 30:1.

2.  A natural citrus juice concentrate comprising:
(a)  citrus juice having a solids content of at least about 35%;
(b)  from about 0.001% to about 0.010% d-limonene; and
(c)  citrus volatile compounds, at least four of said volatile compounds comprising acetaldehyde, methanol, ethanol, and alpha-pinene, the ratio of (acetaldehyde + methanol + ethanol) to alpha-pinene being greater than about 400:1.

3.  A natural citrus concentrate according to Claim 1 wherein at least two of said volatile compounds comprise ethyl butyrate and d-limonene, the ratio of ethyl butyrate to d-limonene being greater than about $8.0 \times 10^{-3}:1$.

4.  A natural citrus juice concentrate comprising:
(a)  citrus juice having a solids content of at least about 35%;
(b)  from about 0.001% to about 0.010% d-limonene; and
(c)  citrus volatile compounds, said volatile compounds comprising a high volatile fraction and a low volatile fraction, at least six of said volatile compounds comprising acetaldehyde, methanol, ethanol, alpha-pinene, ethyl butyrate, and d-limonene, the ratio of said high volatiles to said low volatiles being greater than about 30:1, the ratio of (acetaldehyde + methanol + ethanol) to alpha-pinene being greater than about 400:1, and the ratio of ethyl butyrate to d-limonene being greater than about $8.0 \times 10^{-3}:1$.

5.  A natural citrus juice concentrate according to Claim 4 wherein the citrus juice is selected from the group consisting of orange juice, grapefruit juice, lemon juice, tangerine juice, lime juice, kumquat juice, and mixtures thereof.

6.  A citrus juice beverage comprising:
(a)  about 10% to about 90% citrus juice;
(b)  said citrus juice containing from about 0.001% to about 0.010% d-limonene;
(c)  said citrus juice having a ratio of high volatiles to low volatiles of greater than about 30:1; and
(d)  about 10% to about 90% other beverage ingredients.

7.  A citrus juice beverage comprising:
(a)  about 10% to about 90% citrus juice;
(b)  said citrus juice containing from about 0.001% to about 0.010% d-limonene;
(c)  said citrus juice having a ratio of (acetaldehyde + methanol + ethanol) to alpha-pinene of greater than about 400:1; and
(d)  about 10% to about 90% other beverage ingredients.

8. A citrus juice beverage comprising:
(a) about 10% to about 90% citrus juice;
(b) said citrus juice containing from about 0.001% to about 0.010% d-limonene;
(c) said citrus juice having a ratio of ethyl butyrate to d-limonene of greater than about $8.0 \times 10^{-3}$:1; and
(d) about 10% to about 90% other beverage ingredients.

9. A citrus juice beverage comprising:
(a) about 10% to about 90% citrus juice;
(b) said citrus juice containing from about 0.001% to about 0.010% d-limonene;
(c) said citrus juice having a ratio of high volatiles to low volatiles of greater than about 30:1;
(d) said citrus juice having a ratio of (acetaldehyde + methanol + ethanol) to alpha-pinene of greater than about 400:1;
(e) said citrus juice having a ratio of ethyl butyrate to d-limonene of greater than about $8.0 \times 10^{-3}$:1; and
(f) about 10% to about 90% other beverage ingredients.

10. A citrus juice beverage according to Claim 9 wherein the beverage comprises about 20% to about 90% citrus juice and about 10% to about 80% other beverage ingredients.

11. A citrus juice beverage according to Claim 9 wherein the other beverage ingredients are selected from the group consisting of water, sugar, artificial sweeteners, flavors, fruit juices, and mixtures thereof.

12. A citrus juice beverage according to Claim 9 wherein the citrus juice is selected from the group consisting of orange juice, grapefruit juice, lemon juice, tangerine juice, lime juice, kumquat juice, and mixtures thereof.

13. A citrus juice having a solids content of about 9% to about 15% and a peel oil content of about 0.001% to about 0.010% to which essence is added to produce a juice having a high essence/oil ratio wherein the ratio of high volatiles to low volatiles is greater than about 30:1.

14. A citrus juice having a solids content of about 9% to about 15% and a peel oil content of about 0.001% to about 0.010% to which essence is added to produce a juice having a high essence/oil ratio wherein the ratio of (acetaldehyde + methanol + ethanol) to alpha-pinene is greater than about 400:1.

15. A citrus juice according to Claim 13 having a solids content of about 9% to about 15% and a peel oil content of about 0.001% to about 0.010% to which essence is added to produce a juice having a high essence/oil ratio wherein the ratio of ethyl butyrate to d-limonene is greater than about $8.0 \times 10^{-3}$:1.

16. A citrus juice according to Claim 13 wherein the juice is pasteurized orange juice.

17. A citrus juice beverage according to Claim 9 wherein the beverage has a solids content of about 3% to about 60%.

0198591

European Patent
Office

**EUROPEAN SEARCH REPORT**

Application number

EP    86 30 1803

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 374 865   (R.G. STROBEL)<br>* abstract; column 14, claim 1 * | 1-5 | A 23 L    1/222<br>A 23 L    2/06<br>A 23 L    2/08 |
| | --- | | |
| A | EP-A-0 110 638   (PROCTER & GAMBLE CO.)<br>* abstract * | | |
| | ----- | | |

**TECHNICAL FIELDS SEARCHED (Int. Cl.4)**

A 23 L    1/00
A 23 L    2/00

The present search report has been drawn up for all claims

| Place of search | Date of completion of the search | Examiner |
|---|---|---|
| BERLIN | 10-06-1986 | SCHULTZE D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L :. document cited for other reasons

 

& : member of the same patent family, corresponding
    document

EPO Form 1503 03 82